# EUROPEAN PATENT SPECIFICATION

(11) **EP 1 302 710 B1**
(45) Date of publication and mention of the grant of the patent: **23.02.2005**
(21) Application number: 01500251.2
(22) Date of filing: 19.10.2001
(51) Int. Cl.: F16K 37/00, A62C 13/64

(54) **Valve for recipient containers for high pressure extinguishing agents**
Ventil für einen Behälter mit Hochdrucklöschmittel
Soupape pour un récipient avec agent d'extinction sous haute pression

(30) Priority: 09.10.2001 ES 200102245
(43) Date of publication of application: 16.04.2003
(73) Proprietor: L.P.G. Tecnicas en Extincion de Incendios, S.A., 08950 Esplugas de Llobregat Barcelona (ES)
(72) Inventor: Leon Timoneda, Angel, 08950 Esplugas de Llobregat, Barcelona (ES)
(74) Representative: Gomez-Acebo, Ignacio

(56) References cited:
- EP-A- 1 000 635
- FR-A- 2 537 689
- FR-A- 2 589 976
- GB-A- 2 265 085
- US-A- 6 032 745

## Description

### OBJECT OF THE INVENTION

The present invention refers to a valve for recipient containers for high pressure extinguishing agents, having in the body various holes in which a manometer, a solenoid valve, a pressostat, a safety valve and a manually operated firing element are respectively coupled, as well as also having a bottom chamber attachable to the recipient container, an outlet, and a chamber facing the bottom chamber and isolated from the outside by means of a screwed cap, in which a plunger is housed, receiving the force exercised by a spring, and related by means of a piston with a coupling holding body that has the job of opening and closing the valve, and presenting a plurality of conduits in the inside of the body of the valve, forming various circuits amongst them those of the opening going from the bottom chamber to the mentioned chamber.

### BACKGROUND OF THE INVENTION

At present, it is normal to see that the valves being employed in recipient containers for high pressure extinguishing agents present a buttress as the outlet to the exterior in which the connections to the manometer, the pressostat and towards a chamber are attached, in the interior of which the fluid pressure provokes the opening of the valve.

The drawback of these type of valves and other similar ones is that in the exterior of their bodies they have all the operating elements, so that, apart from all these elements being exposed to all types of aggressions, they facilitate the existence of leaks.

As background of the invention, we can highlight the Spanish Utility Model application number ES-1.002.675 U, relative to an improved valve presenting the special characteristic that all the conduits forming the auxiliary firing circuit and all the elements necessary for provoking its operation are done or fixed onto the body of the valve, forming a compact unit.

However, a problem presented by the various models of valves currently existing to carry out the mentioned function, is the number of connections found within their design, with the important risk of leaks that this implies.

Another problem also presented by the current models, is knowing if the loss of fluid in the recipients is due to leaks or to the activation of the valve.

### DESCRIPTION OF THE INVENTION

To solve the mentioned problems, the valve for recipient containers for high pressure extinguishing agents object of the invention has been designed, providing constructive features oriented towards assuring operational reliability, low manufacturing costs, design and employment simplicity, easy maintenance and repair and above all, greater personal security with the minimum amount of internal components.

According to the invention, the valve has a series of internal conduits communicating the conduit for the pressure input into the manometer with the conduit for the automatic operation solenoid valve and with that of the pressostat. At the same time, these conduits are connected with the bottom chamber of the valve by means of a sole and common hole, in the inside of which a small anti-return valve is housed which, depending on its position, allows or not the pressure to pass from the interior of the recipient container towards the manometer, the solenoid valve and the pressostat pressure entry conduits.

The interior charge of the recipient container may be supervised by the manometer and also by an external control panel by means of the electrical contact that is incorporated to the pressostat.

In the manometer pressure entry conduit a small anti-return valve is found. In this manner, since the manometer, the solenoid valve and the pressostat couplings are internally connected, it is only necessary to use one anti-return valve, reducing in this way the number of points with a risk of leaks.

Said anti-return valve is situated in such a manner that the assembly of the manometer provokes its opening and the disassembly provokes its closure. Thus, by dismounting the manometer from its coupling in the valve the pressure feed towards the pressostat and the solenoid valve is automatically cut off, it being possible to safely dismount these elements without the risk of leaks occurring, even though there is pressure inside the recipient container. This circumstance facilitates to carry out of many maintenance operations on the equipment, in that it allows for it to be done without emptying the equipment.

Thus, when the manometer is placed in its housing within the valve it produces the opening of the small anti-return valve, being the valve ready for its use.

Once installed over the valve, the manometer is protected by a sleeve so as to avoid direct hits on it, and it has locknut means that allows its dial to be oriented so as to adjust its reading to the normal working position.

When the valve is activated, the pressure retained by same is released and directed towards the top chamber by means of an internal conduit, producing in this manner the opening of the valve.

The valve has an alleviation conduit that connects the manometer pressure entry conduit with the outside, so as to allow safe removal of the pressure existing between the coupling and the conduits during disassembly of the manometer.

The location of the alleviation conduit is such that it carries out the decompression after the closure of the small anti-return valve, and before the manometer has been released from the body of the valve, preventing in this manner that the manometer be fired off due to the effects of the released pressure. Also, given the geometry of the coupling and the manometer, it is possible to assembly the manometer in a safe manner without gas leaks occurring.

To assure the reliability of the valve, a seal has been included, allowing to know if the valve has been activated at any time. For this, on the upper surface the plunger has cavities, and the mentioned seal is covering said surface. When the excess pressure in the top chamber is sufficient so as to provoke the opening, said cavities allow the breakage or deformation of the seal, leaving in this manner evidence of the firing of the valve.

In the event of the discharge of the cylinder, this seal is very useful to determine if it has been due to a micro leak or to a real activation.

In the assembly area of the protector element of the manometer, the valve presents an undercutting with the aim of facilitating the passage of a cable towards the exterior, in the event that the manometer is provided with means to provide an electrical signal.

### DESCRIPTION OF THE DRAWINGS

To complement the description that is being carried out and with the object of helping in a better understanding of the features of the invention, attached to the specification and claims is a set of drawings where, purely for illustrative and not limiting purposes, the following is shown:
- Figure 1 shows a frontal view of the valve for recipient containers for high pressure extinguishing agents.

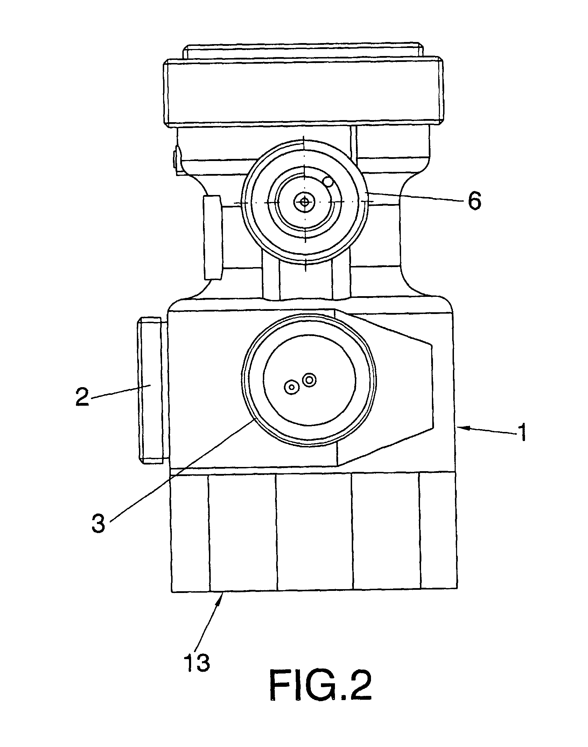

- Figure 2 shows a profile view of the valve.

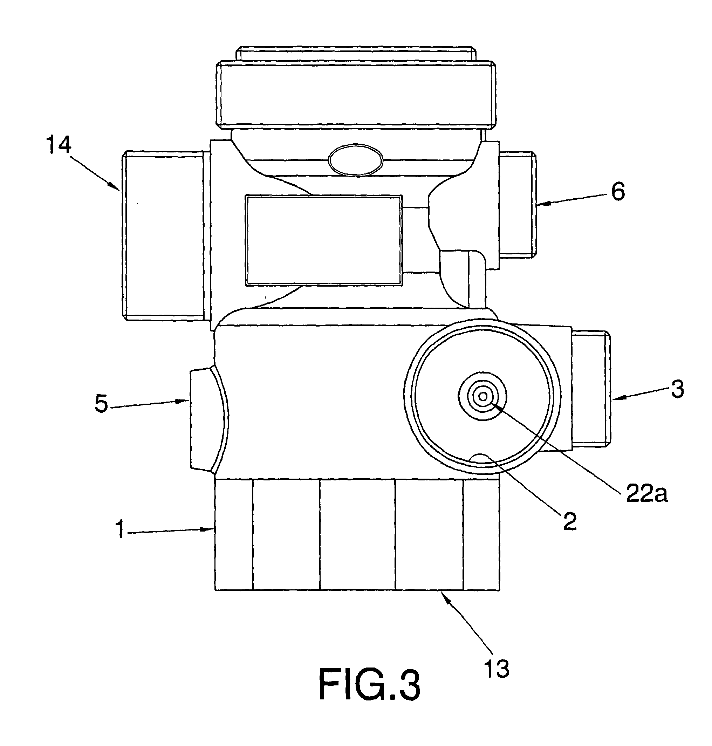

- Figure 3 shows an elevated view of the valve.
- Figure 4 shows an elevated view of the valve with a section in which the pressure output conduits from the solenoid valve and of the manual firing element to the chamber are shown.
- Figure 5 and 5a shows a cross-section plan view of the valve and also, a cut off detailed view of the anti-return valve.

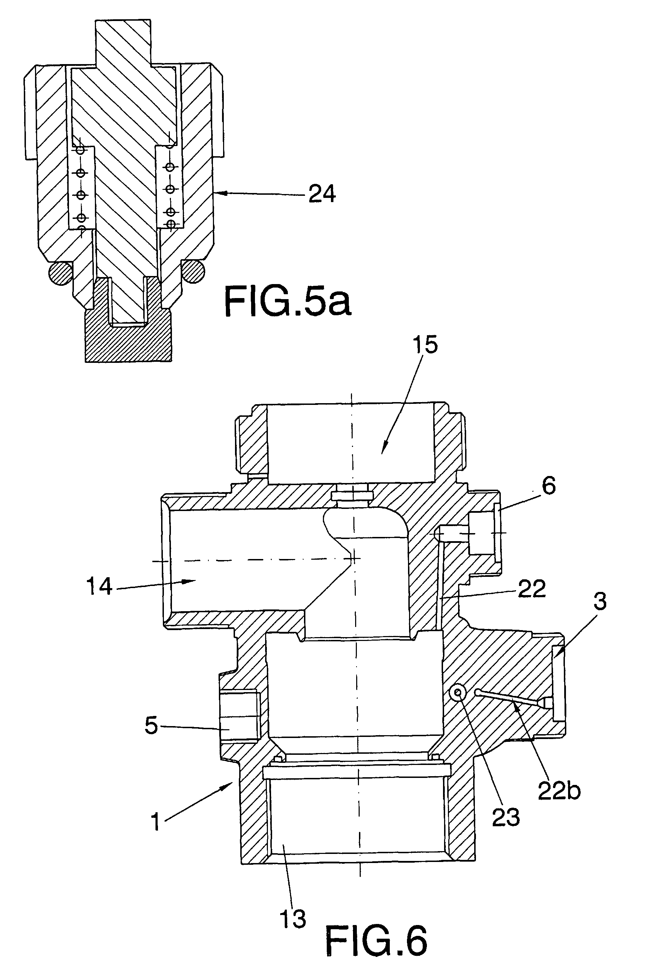

- Figure 6 shows an elevated view of the valve with a section in which the pressure input conduits towards the solenoid valve and the manual firing element are shown.
- Figure 7 shows a partial view, in perspective, of the upper part of the valve from which the screwed cap has been removed, and shows the housing of the plunger with a pair of cavities and the seal separated from its location in the service position.

### PREFERRED EMBODIMENT OF THE INVENTION

As can be observed in the above mentioned drawings, on its body (1) the valve for recipient containers for high pressure extinguishing agents, has various holes in whose mouths (2, 3, 4, 5 and 6) a manometer (7) provided with a protector element (8), an automatically operated solenoid valve (9), a pressostat (10), a safety membrane (11) and a manually operated firing element (12) are respectively connected.

Furthermore, it also has defined a bottom chamber (13) attachable to a recipient container of the extinguishing agent, an outlet (14) and a top chamber (15) facing the mentioned bottom chamber (13) and which is isolated from the exterior by means of a screwed cap (16) provided with an alleviation valve (17) to allow the output of fluid towards the exterior when the pressure accumulated in said top chamber (15) lacks the necessary force so as to produce the opening of the main valve.

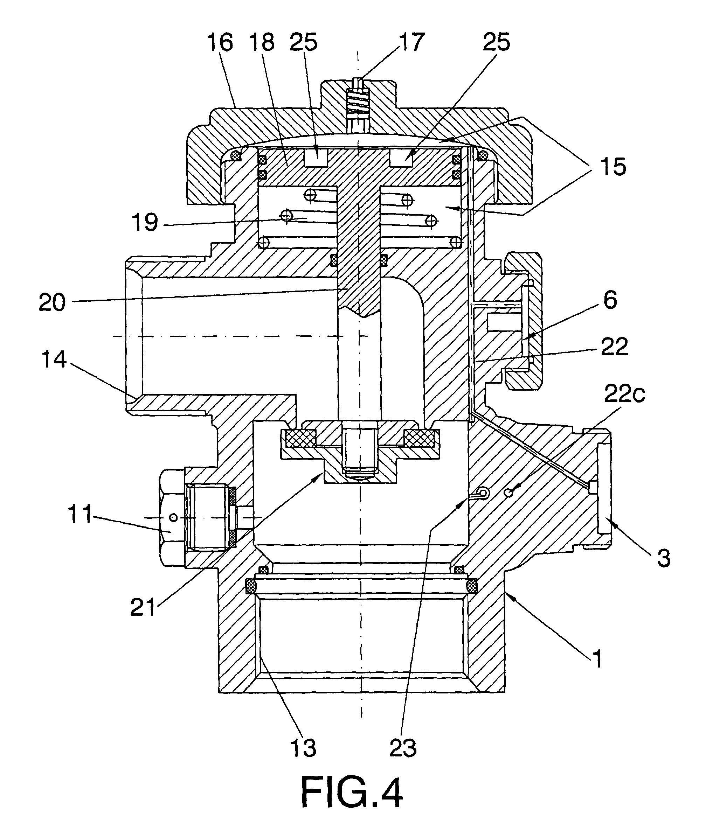

As shown in figure 4, a plunger (18) is housed inside the top chamber (15), receiving the force exercised by a spring (19). Said plunger (18) is related by means of a piston (20) with a coupling holding body (21) which has the job of effecting the opening and closing of the valve.

Various conduits (22, 22a, 22b, 22c and 22d) are defined inside the body (1) of the valve, shaping various circuits, amongst them those pertaining to the opening of the valve going from the bottom chamber (13) towards the top chamber (15), allowing the fluid to pass from the first one to the second one when any one of the circuits is opened. If the fluid pressure that passes provokes sufficient push over the plunger (18) for same to overcome the force of the spring (19) by means of the piston (20), a downward movement will occur towards the coupling holding body (21), opening in this way the valve.

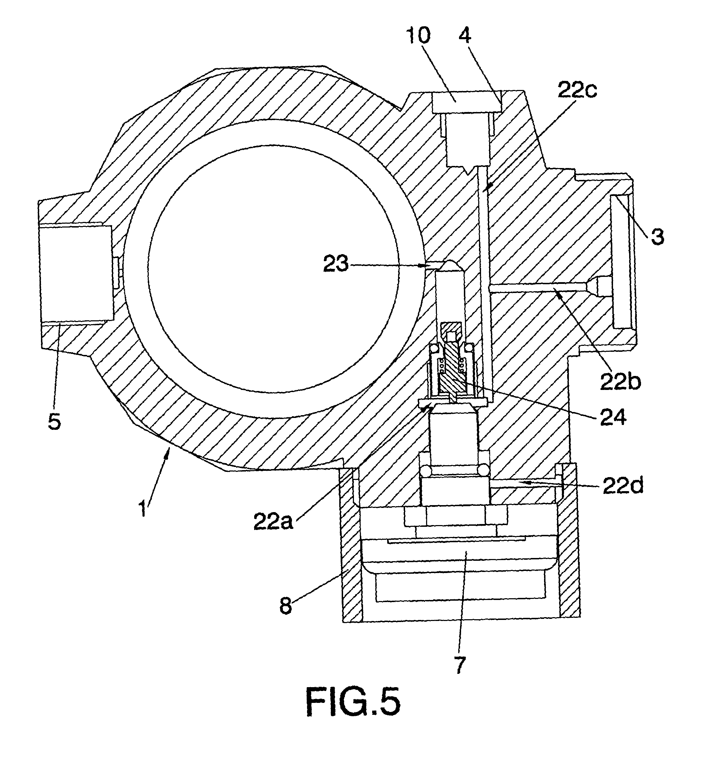

As shown in figure 5, in our embodiment the conduits (22a, 22b and 22c) for pressure entry towards, respectively the manometer (7), the solenoid valve (9) and the pressostat (10) are related amongst themselves and connected with the bottom chamber (13) of the valve by means of a single hole (23), coinciding in this embodiment with the conduit (22a), in the interior of which a small anti-return valve (24) is housed which, depending on the position, allows or not the passing of pressure from the interior of the recipient container towards the feeding conduits (22a, 22b and 22c) of the manometer (7), of the solenoid valve (9) and the pressostat (10) respectively.

The anti-return valve (24), detailed in figure 5a, is situated in the conduit (22a) corresponding to the entry of pressure into the manometer (7), so that by taking same it plugs the hole (23) that communicates with the bottom chamber (13), isolating the circuit that links the manometer (7) with the solenoid valve (9) that is automatically operated and the pressostat (10), assuring in this manner that there are no leaks of the contents of the recipient even if there exists internal pressure within same. The assembly of the manometer (7) provokes the opening of the anti-return valve (24).

The valve has an alleviation conduit (22d) that links the manometer (7) pressure entry conduit (22a) with the exterior, to allow safe removal of the pressure existing in the coupling and the conduits (22a, 22b and 22c) during disassembly, before the manometer (7) is totally dismounted, avoiding in this manner that it be fired off due to the effects of the released pressure.

Concretely, the decompression is carried out after the closure of the anti-return valve (24) and before the manometer (7) has been released from the body (1) of the valve.

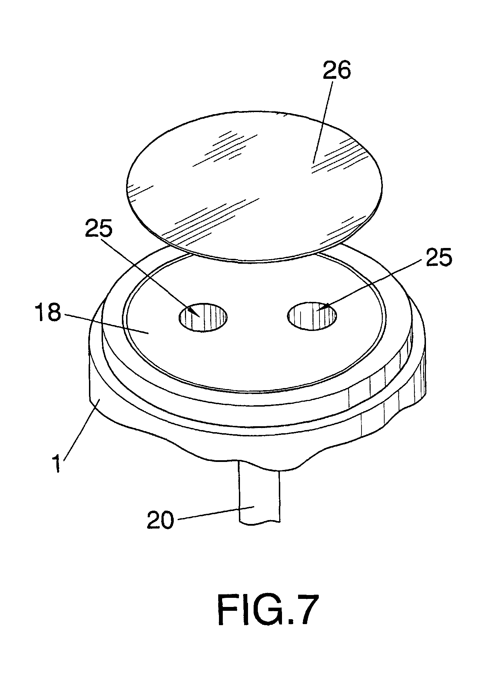

As shown in figure 4 and in detail in figure 7, in its upper surface the plunger (18) has two cavities (25) and a seal (26) covering said surface. When the excess pressure in the top chamber (15) is sufficient so as to provoke the opening of the valve, said cavities (25) allow the breakage or deformation of the seal (26), leaving in this manner evidence of the firing of the valve.

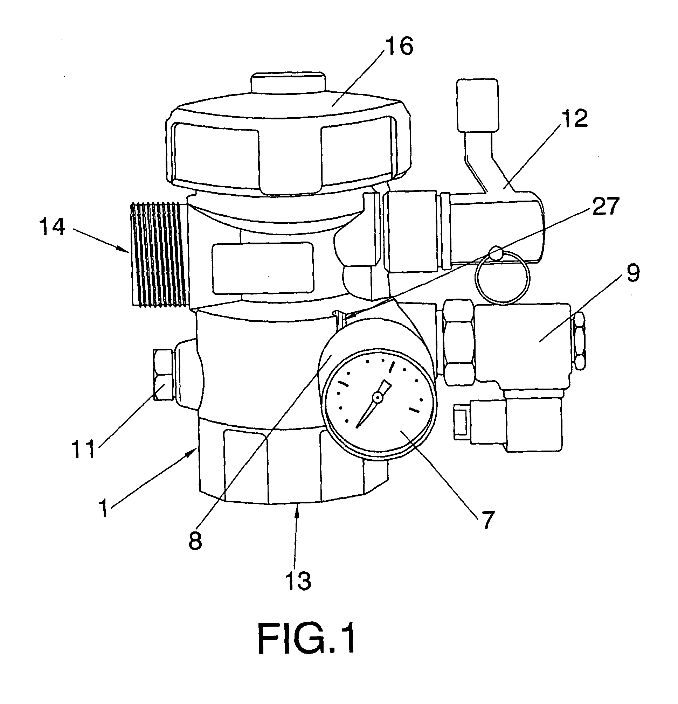

As shown in figure 1, in order to allow the passage of a cable towards the exterior, in the event that the manometer were to have means to provide an electrical signal, the valve has an undercutting (27) in its body (1) in the assembly area of the protector element (8) of the manometer (7).

Once sufficiently described the nature of the invention, as well as an example of a preferred embodiment, it is put on record for the appropriate effects, that the materials, shape, size and arrangement of the described elements may be modified, provided that this does not imply an alteration of the essential features of the invention, that is claimed below.

## Claims

1. Valve for recipient containers for high pressure extinguishing agents, of the type having a body (1) with various holes in whose mouths (2, 3, 4, 5 and 6) a manometer (7) provided with a protector element (8), an automatically operated solenoid valve (9), a pressostat (10), a safety membrane (11) and a manually operated firing element (12) are respectively connected, also having a bottom chamber (13) attachable to a recipient container, an outlet (14) and a top chamber (15) facing the mentioned bottom chamber (13) and which is isolated from the exterior by means of a screwed cap (16), in which is housed a plunger (18), that receives the force exercised by a spring (19), and is related by means of a piston (20) with a coupling holding body (21) which has the job of effecting the opening and closing of the valve, and having various conduits (22) in the interior of the body (1) of the valve, shaping various circuits, amongst them those pertaining to the opening going from the bottom chamber (13) towards the top chamber (15); **characterized in that** the manometer (7), solenoid valve (9) and pressostat (10) pressure entry conduits (22a, 22b and 22c) are related amongst themselves and connected with the bottom chamber (13) of the valve by means of a single hole (23), in the interior of which is housed a small anti-return valve (24) that, depending on the position, allows or not the pressure to pass from the interior of the recipient container towards the feeding conduits (22a, 22b and 22c) of the manometer (7), the solenoid valve (9) and the pressostat (10).

2. Valve in accordance with the previous claim, **characterized in that** the hole (23) that carries the anti-return valve (24) corresponds to the manometer (7) pressure entry conduit (22a), the mounting of the manometer (7) provoking the opening of the anti-return valve (24) and the disassembly of said manometer (7) provoking the closure of the mentioned anti-return valve (24).

3. Valve in accordance with the previous claims, **characterized in that** it has an alleviation conduit (22d) that connects the manometer (7) pressure entry conduit (22a) with the exterior, to allow safe removal of pressure existing in conduits (22a, 22b and 22c) during the disassembly of the manometer (7), concretely after the closure of the anti-return valve (24) has occurred and before the manometer (7) has been released from the body (1) of the valve.

4. Valve in accordance with the previous claims, **characterized in that** the plunger (18) has in its upper surface various cavities (25) and a seal (26) covering said surface, so that when there is sufficient excess pressure in the top chamber (15) so as to provoke the opening of the valve, said cavities (25) allows the breakage or deformation of the seal (26), leaving in this manner evidence of the firing of the valve.

5. Valve in accordance with the previous claims, **characterized in that** in the assembly area of the protector element (8) of the manometer (7), the body (1) has an undercutting (27) with the aim of facilitating the passage of a cable towards the exterior, in the event that the manometer is provided with means to provide an electrical signal.

## Patentansprüche

1. Ventil für einen Behälter mit Hochdrucklöschmittel der Art, die einen Körper (1) mit mehreren Bohrungen aufweist, in deren Mündungen (2, 3, 4, 5 und 6) jeweils ein mit einem Schutzelement (8) versehenes Manometer (7), ein automatisch betriebenes Solenoidventil (9), einen Druckregler (10), eine Sicherheitsmembran (11) und ein handbetriebenes Auslöseelement (12) angeschlossen ist, welche auch eine untere Kammer (13) aufweist, die an einem Behälter befestigt werden kann, sowie einen Abfluss (14) und eine der genannten unteren Kammer (13) zugewandte obere Kammer (15), die durch einen Schraubdeckel (16) von außen isoliert ist, in welcher ein Kolben (18) aufgenommen ist, der die von einer Feder (19) ausgeübten Kraft aufnimmt und mittels eines Stempels (20) mit einem einen Anschluss tragenden Körper (21), der die Aufgabe hat, das Öffnen und das Schließen des Ventils zu vollziehen, in Verbindung steht, wobei auch mehrere Leitungen (22) im Inneren des Ventilkörpers (1) vorhanden sind, die mehrere Kreisläufe bilden, einschließend diejenige die am Öffnungsvorgang beteiligt sind, welche von der unteren Kammer (13) bis hin zur oberen Kammer (15) reichen; **dadurch gekennzeichnet, dass** die Druckeintrittsleitungen (22a, 22b und 22c) ins Manometer (7), ins Solenoidventil (9) und in den Druckregler (10) miteinander in Verbindung stehen und durch eine einzige Bohrung (23) mit der unteren Ventilkammer (13) verbunden sind, wobei im Inneren dieser Bohrung ein kleines Rückschlagventil (24) aufgenommen ist, das abhängig von der Position den Durchgang des Druckes vom Inneren des Behälters zu den Zuführungsleitungen (22a, 22b und 22c) ins Manometer (7), ins Solenoidventil (9) und in den Druckregler (10) entweder ermöglicht oder nicht.

2. Ventil nach dem vorhergehenden Anspruch, **dadurch gekennzeichnet, dass** die Bohrung (23), welche das Rückschlagventil (24) trägt, der Druckeinführungsleitung (22a) ins Manometer (7) entspricht, wobei der Einbau des Manometers (7) die Öffnung des Rückschlagventils (24) verursacht und der Abbau des besagten Manometers (7) das Schließen des genannten Rückschlagventils (24) verursacht.

3. Ventil nach den vorhergehenden Ansprüchen, **dadurch gekennzeichnet, dass** es eine Abflussleitung (22d) aufweist, welche die Druckeinführungsleitung (22a) ins Manometer (7) mit der Umgebung verbindet, um während des Abbauens des Manometers (7) eine sichere Entlastung des in den Leitungen (22a, 22b und 22c) herrschenden Druckes zu ermöglichen, genauer gesagt nachdem das Schließen des Rückschlagventils (24) erfolgt ist und bevor das Manometer (7) vom Ventilkörper (1) entfernt wurde.

4. Ventil nach den vorhergehenden Ansprüchen, **dadurch gekennzeichnet, dass** der Kolben (18) in seiner oberen Fläche mehrere Vertiefungen (25) und einen die besagte Fläche bedeckenden Dichtverschluss (26) aufweist, so dass die besagten Vertiefungen (25) das Brechen oder die Verformung des Dichtverschlusses (26) ermöglichen, wenn ausreichend Überdruck in der oberen Kammer (15) herrscht, um die Öffnung des Ventils zu verursachen, wobei auf diese Weise ein Nachweis des Auslösens des Ventils bestehen bleibt.

5. Ventil nach den vorhergehenden Ansprüchen, **dadurch gekennzeichnet, dass** der Körper (1) im Einkopplungsbereich des Schutzelementes (8) des Manometers (7) ein Aussparung (27) aufweist mit dem Zweck den Durchgang eines Kabels nach Außen zu ermöglichen, falls das Manometer mit Mitteln zur Lieferung eines elektrischen Signals versehen ist.

## Revendications

1. Soupape pour récipients conteneurs avec agents d'extinctions à haute pression, du type ayant un corps (1) avec divers trous dans les embouchures (2, 3, 4, 5 y 6) desquels sont connectés respectivement un manomètre (7) pourvu d'un élément (8) protecteur, une soupape (9) solénoïde à actionnement automatique, un pressostat (10), une membrane (11) de sécurité et un élément (12) de déclenchement d'actionnement manuel, qui a également une chambre (13) inférieure qui peut être fixée à un récipient conteneur, une sortie (14) et une chambre (15) supérieure qui est en regard de la chambre (13) inférieure précitée et qui est isolée de l'extérieur au moyen d'un couvercle (16) à vis, dans lequel est logé un plongeur (18), qui reçoit la force exercée par un ressort (19), celui-ci étant en rapport au moyen d'un piston (20) avec un corps (21) porteur du joint ayant la fonction d'effectuer l'ouverture et la fermeture de la soupape, et qui a plusieurs conduits (22) à l'intérieur du corps (1) de la soupape, qui forment plusieurs circuits, parmi eux se trouvent ceux appartenant à l'ouverture, qui vont de la chambre (13) inférieure vers la chambre (15) supérieure; **caractérisée en ce que** les conduits (22a, 22b et 22c) d'entrée de pression au manomètre (7), à la soupape (9) solénoïde et au pressostat (10) sont mis en rapport entre eux et connectés à la chambre (13) inférieure de la soupape qu moyen d'un seul trou (23), à l'intérieur duquel est logée une petite soupape (24) anti-retour qui, en fonction de la position, permet ou pas que la pression passe depuis l'intérieur du récipient conteneur vers les conduits (22a, 22b et 22c) d'alimentation du manomètre (7), de la soupape (9) solénoïde et du pressostat (10).

2. Soupape selon la revendication antérieure, **caractérisé en ce que** le trou (23) qui inclut la soupape (24) anti-retour correspond avec le conduit (22a) d'entrée de pression au manomètre (7), le montage du manomètre (7) provoquant l'ouverture de la soupape (24) anti-retour et le démontage dudit manomètre (7) provoquant la fermeture de ladite soupape (24) anti-retour.

3. Soupape selon les revendications antérieures, **caractérisée en ce qu'**elle a un conduit (22d) d'allégement qui connecte le conduit (22a) d'entrée de pression au manomètre (7) avec l'extérieur, pour permettre une évacuation sûre de la pression existante dans les conduits (22a, 22b et 22c) pendant le démontage du manomètre (7), précisément après la fermeture de la soupape (24) anti-retour et avant que le manomètre (7) soit retiré du corps (1) de la soupape.

4. Soupape selon les revendications antérieures, **caractérisée en ce que** le plongeur (18) a sur sa surface supérieure diverses cavités (25) et un scellé (26) qui recouvre ladite surface, de manière qu'il y ait une surpression suffisante dans la chambre (15) supérieure pour la production de l'ouverture de la soupape, lesdites cavités (25) permettent la rupture ou déformation du scellé (26), en mettant de cette manière en évidence le déclenchement de la soupape.

5. Soupape selon les revendications antérieures, **caractérisée en ce que** dans la zone de montage de l'élément (8) protecteur du manomètre (7), le corps (1) a une feuillure (27) afin de faciliter le passage d'un câble vers l'extérieur, au cas où le manomètre serait pourvu de moyens pour fournir un signal électrique.
